# EUROPÄISCHE PATENTSCHRIFT

(11) **EP 0 478 652 B1**
(45) Veröffentlichungstag und Bekanntmachung des Hinweises auf die Patenterteilung: **12.01.1994**
(21) Anmeldenummer: 90909727.1
(22) Anmeldetag: 20.06.1990
(51) Int. Cl.: G06K 11/02

(54) **DIGITALISIERGERÄT**
DIGITIZER
NUMERISEUR

(30) Priorität: 22.06.1989 DE 3920429
(43) Veröffentlichungstag der Anmeldung: 08.04.1992
(73) Patentinhaber: G.M. Pfaff Aktiengesellschaft, 67655 Kaiserslautern (DE)
(72) Erfinder: HANUS, Helfried, D-7500 Karlsruhe-Durlach (DE)
(86) Internationale Anmeldenummer: EP9000975
(87) Internationale Veröffentlichungsnummer: WO9016044

(56) Entgegenhaltungen:
- DE-B- 1 943 217
- US-A- 3 636 256

## Beschreibung

Die Erfindung bezieht sich auf ein Digitalisiergerät nach dem Oberbegriff des Anspruchs 1.

Durch die US-A-3 636 256 ist ein Digitalisiergerät gemäß dem Oberbegriff des Patentanspruchs 1 bekannt, bei dem das Abtastorgan von Hand in zwei zueinander senkrechten Koordinatenrichtungen über einen bestimmten Kurvenzug bewegt werden kann. An vorbestimmten Punkten dieses Kurvenzuges werden von Hand über ein Auslöseelement Koordinatensignale erzeugt, welche der jeweiligen Position des Abtastorganes entsprechen.

Das bekannte Gerät weist einen Wagen auf, der auf seiner einen Seite über zwei Rollenlager auf eine am Gehäuse befestigten Stange geführt ist. Auf seiner anderen Seite ist der Wagen über eine Stützrolle in einer U-förmigen Führungsbahn geführt, um ihn gegen eine Kippbewegung zu sichern. Die im Abstand voneinander auf der Stange angeordneten Rollenlager weisen jeweils drei im Winkel von 120° angeordnete Laufrollen auf, die auf der Stange abrollen. Diese Konstruktion ergibt zwar durch die doppelte Anordnung von Rollenlagern auf einer Seite des Wagens eine gute Parallelführung, erfordert aber einen erheblichen Aufwand an Präzision bei der Montage der Rollenlager, damit diese einwandfrei arbeiten und eine genaue Ausrichtung von Führungsstange und U-förmiger Führungsbahn, damit keine Verspannungen beim Betrieb auftreten. Die Montage der Laufschienen und die Lagerung des Wagens ist sehr aufwendig und erfordert daher eine genaue Einstellung bei der Montage. Insbesondere durch die größere Zahl von Laufelementen ist auch deren gegenseitige Einstellung kompliziert und problematisch.

Der Erfindung liegt die Aufgabe zugrunde, ein Digitalisiergerät nach dem Oberbegriff des Anspruchs 1 zu schaffen, das eine kompakte Bauweise aufweist, einfach in der Montage und transportabel sowie leicht zu bedienen ist.

Diese Aufgabe wird durch die kennzeichnenden Merkmale des Anspruchs 1 gelöst.

Mit der erfindungsgemäßen Anordnung ergibt sich nunmehr trotz einfacher Bauweise eine spielfreie Verbindung zwischen dem das Fadenkreuz tragenden Stellglied, dem Kreuzschlitten und dem Filmstreifen, so daß die von dem Arbeitsblatt aufzunehmenden Koordinatenpunkte reproduzierbar durch die Signalaufnehmer erfaßt werden können.

In den Unteransprüchen sind vorteilhafte Weiterbildungen der Erfindung angegeben.

Eine besonders einfache Sicherung der Lage des Kreuzschlittens beim Kippen des Gerätes mit zusätzlicher Erhöhung der Spielfreiheit ist durch die Maßnahmen nach den Ansprüchen 2 und 3 gegeben.

Die Ausbildung nach den Ansprüchen 5 und 6 begünstigt eine einfache Bauweise des Kreuzschlittens.

Durch die Anordnung der Seilzüge nach den Anspruchen 7 bis 9 wird die Seilführung bis auf den in dem Schieber verlaufenden Teil in das seitliche Längsgehäuse des Gerätes verlegt und somit die Arbeitsfläche uber dem Arbeitsblatt freigehalten.

Die Verwendung von besonderen Verbindungselementen zwischen dem Seilzug und dem Filmstreifen nach Anspruch 10 begünstigt sowohl eine einfache und sichere Verbindungsart als auch eine leichte Justierung des Filmstreifens.

Die Erfindung wird anhand eines in der Zeichnung dargestellten Ausführungsbeispiels erläutert:

Es zeigt:
- Fig. 1: eine perspektivische Draufsicht auf das Digitalisiergerät mit geöffnetem Deckel, teilweise gebrochen,
- Fig. 1a: eine Seitenansicht des Punktes A der Fig. 1, zum Teil geschnitten,
- Fig. 2: einen Schnitt nach der Linie II-II der Fig. 1,
- Fig. 3: einen Schnitt nach der Linie III-III der Fig. 2,
- Fig. 4: einen Schnitt nach der Linie IV-IV der Fig. 3,
- Fig. 5: eine perspektivische Ansicht auf das abgehobene Oberteil von innen, wobei lediglich der vom Schlitten angetriebene Seilzug dargestellt ist,
- Fig. 6: eine der Fig. 5 entsprechende Ansicht, wobei lediglich der mit dem Schieber verbundene Seilzug dargestellt ist.

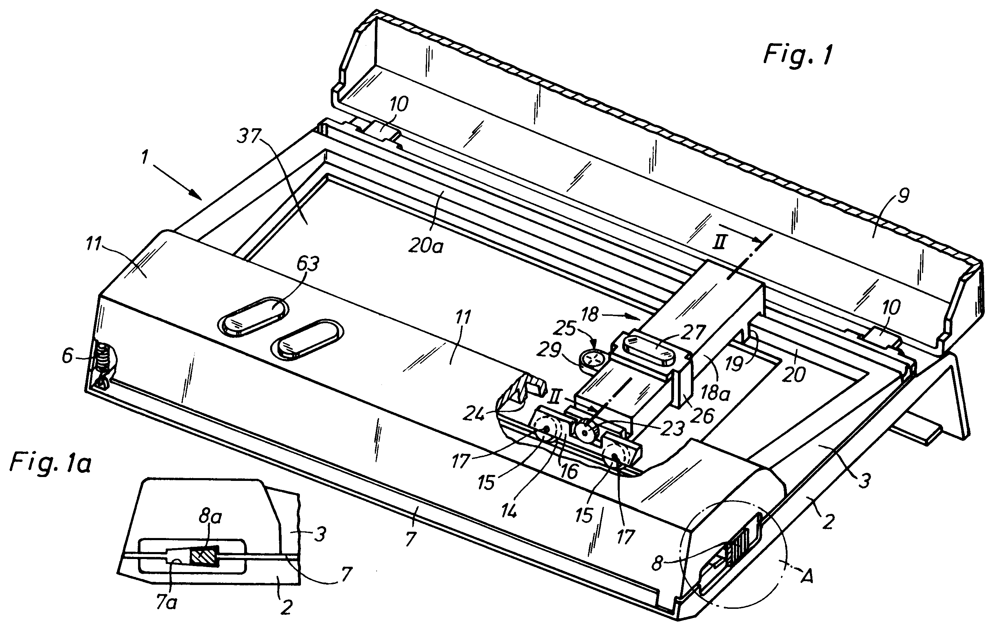

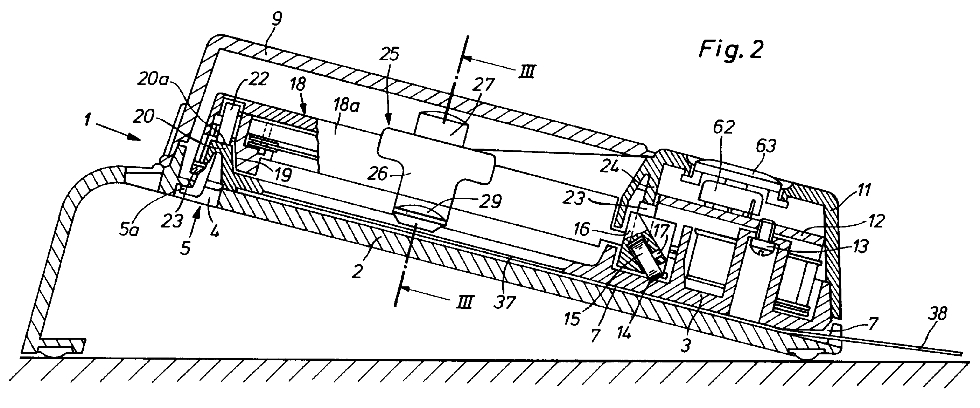

Wie die Fig. 1 und 2 zeigen, weist das Digitalisiergerät ein Gehäuse (1) auf, das aus einer Grundplatte (2) und einem Oberteil (3) besteht, die durch zwei an der Rückseite des Oberteils (3) angeordnete und aus in entsprechende Ausnehmungen (4) in der Grundplatte (2) eingreifende Laschen (5a) gebildete Scharniere (5) miteinander verbunden sind. Durch zwei vorn an den Seiten der Grundplatte (2) und des Oberteils (3) angeordnete Zugfedern (6) wird das Oberteil (3) gegen die Grundplatte (2) gezogen. Der zwischen ihnen bestehende Spalt (7) ist in einem Teil des seitlichen Bereiches zu je einem Keilspalt (7a) (Fig. la) erweitert, in den je ein Schubkeil (8a) eines Schiebers (8) eingreift.

Ein Deckel (9) ist über zwei Steckscharniere (10) aufklappbar mit der Grundplatte (2) verbunden.

Auf dem Oberteil (3) ist in ein kastenförmiger Behälter (11) zur Aufnahme von später beschriebenen Elementen befestigt. Nach unten ist der Behälter (11) durch eine Bodenplatte (12) abgeschlossen, die über Schrauben (13) mit dem Oberteil (3) verbunden ist. Das Oberteil (3) enthält eine V-förmige Führungsbahn (14), deren eine Wand die Laufspur für zwei Stützrollen (15) bildet. Diese sind in schräg in einem Träger (16) befestigten Achsen (17) gelagert. Der Träger (16) ist an einem Schlitten (18) befestigt, der auf seinem dem Träger (16) abgewendeten Ende eine kegelstumpfförmige Nut (19) aufweist, welche eine Laufschiene (20) mit kegelstumpfförmigem Querschnitt im Oberteil (3) umgreift. Auf der Laufschiene (20) ist eine Führungsbahn (20a) ausgebildet, auf der eine im Schlitten (18) gelagerte Stützrolle (22) aufliegt. Die Stützrollen (15 und 22) sind im spitzwinkligen Dreieck angeordnet, um eine stabile Auflage des Schlittens (18) zu gewährleisten. Die äußere Wand der Laufschiene (20) ist z. T. ausgespart, so daß eine an der äußeren Wand der Nut (19) ausgebildete Rastleiste (23) unter den ausgesparten Teil der Wand der Laufschiene (20) einrasten kann.

Auf der Oberseite des Schlittens (18) ist zwischen den beiden Stützrollen (15) aber etwas weiter in Richtung zu der Stützrolle (22) eine weitere Stützrolle (23) gelagert, die sich mit leichtem Druck auf eine an dem Behälter (11) vorgesehene Führungsbahn (24) abstützt und dadurch eine spielfreie Führung der Stützrollen (15 und 22) beim Längsverschieben des Schlittens (18) sichert. Die Stützrollen (15, 22 und 23) sind als Wälzlager ausgebildet.

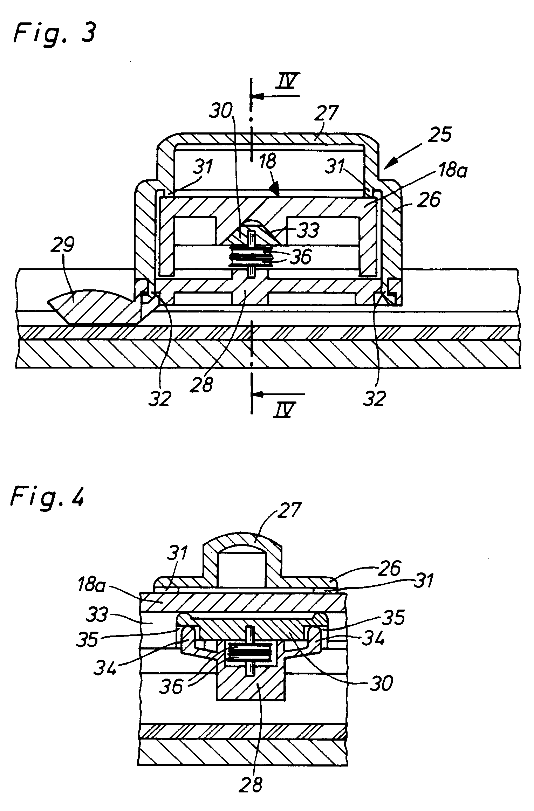

Der Schlitten (18) (Fig. 3 und 4) weist einen Mittelteil (18a) auf, der als Parallelführung für einen quer zur Längsachse des Schlittens (18) verfahrbar angeordneten Schieber (25) vorgesehen ist. Dieser besteht dabei aus einem Führungselement (26) mit einem Handgriff (27), einem Bodenelement (28) mit einem seitlich damit verbundenen Stellglied (29) und einem Gleitstück (30). Das Stellglied (29) ist als Lupe ausgebildet und enthält ein sogenanntes Fadenkreuz.

Das Führungselement (26) umgreift den Mittelteil (18a) des Schlittens (18), wobei vier Gleitnasen (31) auf der Oberseite des Mittelteiles (18a) aufliegen, und ist mit dem unterhalb des Mittelteiles (18a) angeordneten Bodenelement (28) durch Rastnasen (32) verrastet. Das Bodenelement (28) trägt das in einer im Mittelteil (18a) vorgesehenen Keilführung (33) geführte Gleitstück (30). Dieses ist mit dem Bodenelement (28) durch zwei Rastzungen (34) verbunden, die in entsprechende Rastnuten (35) des Gleitstückes (30) eingreifen und dieses nachgiebig in Anlage mit der Keilführung (33) halten. Im Gleitstück (30) sind zwei übereinander angeordnete Seilrollen (36) gelagert, deren Funktion später erläutert wird.

Das Oberteil (3) (Fig. 1 und 2) weist eine Aussparung (37) auf, die so bemessen ist, daß eine Auflagefläche auf der Grundplatte (2) für ein zwischen Grundplatte (2) und Oberteil (3) einschiebbares als Rasterblatt ausgebildetes Arbeitsblatt (38) entsteht, über die bei der seitlichen Bewegung des Schlittens (18) und der quer dazu gerichteten Bewegung des Schiebers (25) das damit verbundene Stellglied (29) bewegbar ist.

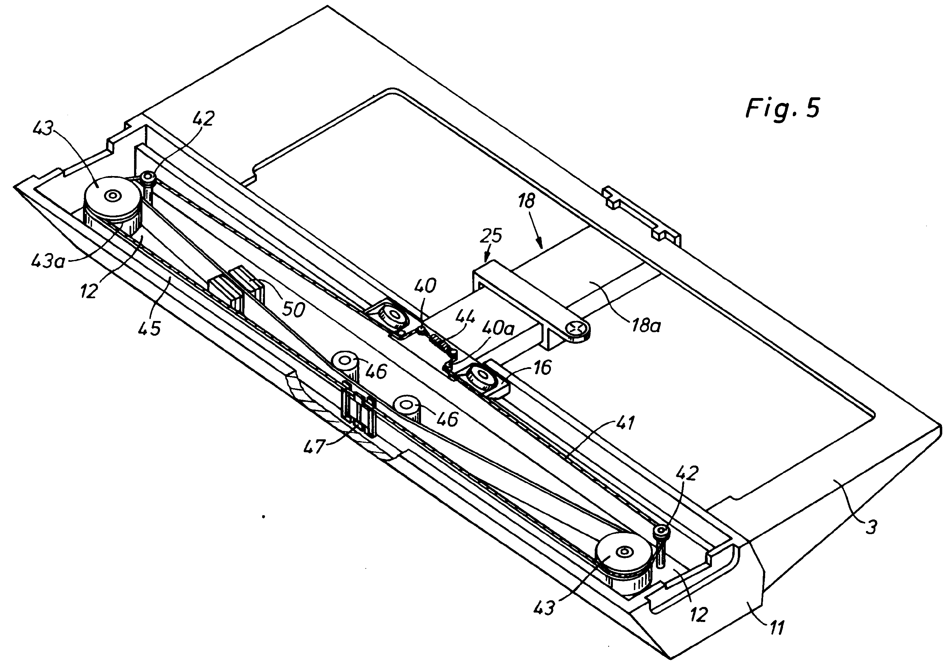

Auf dem mit dem Schlitten (18) (Fig. 5) verbundenen Träger (16) ist ein Stift (40) befestigt, an dem das eine Ende eines Seilzuges (41) eingehängt ist. Dieser läuft über zwei seitlich im Oberteil (3) gelagerte Umlenkrollen (42) und je eine Fadenrille (43a)in zwei diesen benachbarten Führungsrollen (43). Sein anderes Ende ist über eine Feder (44) mit dem Stift (40) verbunden, wobei der Bereich vor dem Ende des Seilzuges (41) über eine an dem Träger (16) vorgesehene Umlenkung (40a) geführt ist.

Über die beiden Führungsrollen (43) ist ein Filmstreifen (45) geführt, der durch zwei Führungsrollen (46) umgelenkt und dessen Enden um Umlenkstege eines Halters (47) geschlungen sind. Nach dem Spannen des Filmstreifens (45) werden seine Enden durch Verkleben gesichert. Die Enden des Seilzuges (41) sind nach Ausrichten des Seilzuges (41) mit dem Filmstreifen (45) ebenfalls in ihrer Lage am Halter (47) durch Kleben gesichert. Der Filmstreifen (45) läuft durch einen Signalaufnehmer (50), der in der Bodenplatte (12) des Behälters (11) befestigt ist.

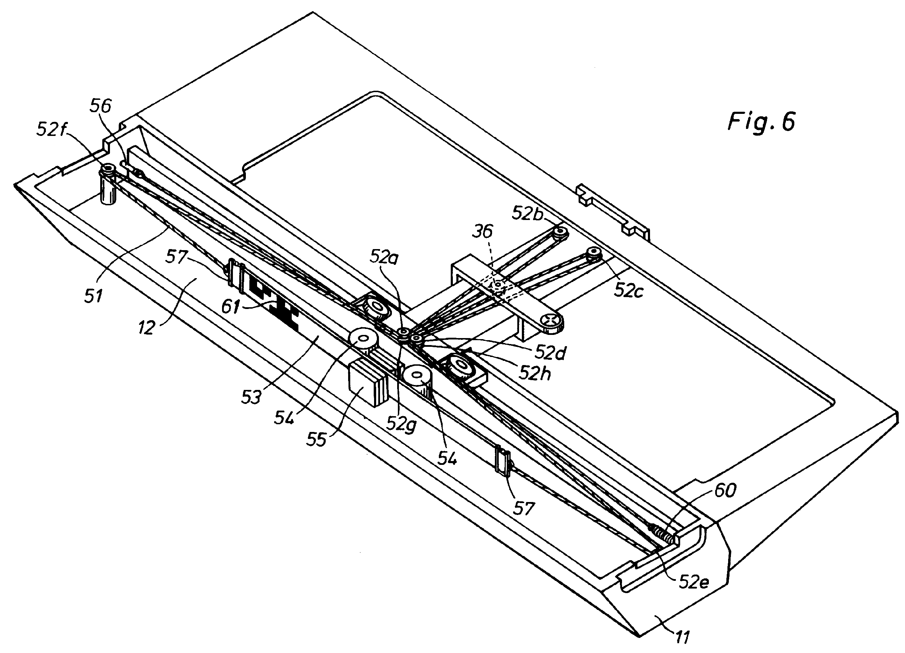

Für die Übertragung der Bewegung des Schlittens (18) ist ein Seilzug (51) (Fig. 6) vorgesehen, der über in der Bodenplatte (12) gelagerte Umlenkrollen (52a bis 52h) und über die im Schieber (25) gelagerten Seilrollen (36) läuft und der mit einem Filmstreifen (53) über zwei Halter (57) an dessen Enden verbunden ist. Der Filmstreifen (53) ist über zwei Führungsrollen (54) geführt und läuft durch einen Signalaufnehmer (55). Der Seilzug (51), der an einer im Behälter (11) befestigten Öse (56) eingehängt ist, läuft Ober die Umlenkrollen (52a und 52b), eine der Umlenkrollen (36), die Umlenkrollen (52c bis 52g), die andere Umlenkrolle (36) und die Umlenkrolle (52h) sowie einen Umlenkstift (58) zu einer im Behälter (11) befestigten Feder (60).

Durch diese Anordnung des Seilzuges (51) wird erreicht, daß ein Verschieben des Schiebers (25) auf dem Schlitten (18) eine entsprechende Längsbewegung des mit dem Seilzug (51) verbundenen Filmstreifens (53) bewirkt, wobei sich dann, wenn die Länge der um die Seilrolle (36) geführten Schleife des Seilzuges (51) verkürzt wird, die Länge der um die Seilrolle (36) geführten Schleife um das gleiche Maß verlängert wird und umgekehrt. Diese Veränderung der Länge der jeweiligen Schleifen des Seilzuges (51) beim Bewegen des Schiebers (25) bewirkt eine entsprechende Verschiebung des Filmstreifens (53) durch den Signalaufnahmer (55), wobei die Bewegungsübersetzung zwischen dem Schieber (25) und dem Filmstreifen (53) dem Verhältnis 1:2 entspricht.

Die Filmstreifen (45 und 53) weisen jeweils auf mehreren Codespuren (61) verteilte aus Hell-Dunkel-Feldern bestehende Codemuster auf, die von den Signalaufnehmern (50 und 55) abtastbar sind. Die Zahl der Codespuren (61) auf dem Filmstreifen (53) ist geradzahlig, so daß der in der Längsmitte liegende Seilzug (51) außerhalb der Codespuren (61) verläuft.

Die Signalaufnehmer (50 und 55) sind über Leitungen mit einer elektronischen Schaltung (62) (Fig. 2) verbunden, die auf der Bodenplatte (12) angeordnet und im Behälter (11) untergebracht ist. Die Schaltung (62) ist über eine weitere Leitung mit einem von Hand betätigbaren als Taster ausgebildeten und in dem Behälter (11) im Oberteil (3) integrierten Eingabeelement (63) verbunden. Außerdem ist die Schaltung (62) über eine Leitung mit einer nicht dargestellten Speichereinrichtung eines elektronischen Aufzeichnungsgerätes verbindbar, beispielsweise einer in einer Nähmaschine enthaltenen elektronischen Programmiereinrichtung zum freien Programmieren von Stichen eines Nähmusters.

Bei der Betätigung des Eingabeelementes (63) sind die Signalaufnehmer (50 und 55) derart aktivierbar, daß sie jeweils ein den Hell-Dunkel-Feldern der jeweiligen Stellung der einzelnen Codespuren (61) der beiden Filmstreifen (45 und 53) entsprechendes Signal an die Speichereinrichtung abgeben.

Das Digitalisiergerät arbeitet wie folgt:

Nach dem Aufzeichnen der den späteren Einstichpunkten eines auf eine Nähmaschine herstellbaren Nähmusters entsprechenden Koordinatenpunkten eines Linienzuges auf dem Arbeitsblatt (38) wird der Spalt (7) zwischen der Grundplatte (2) und dem Oberteil (3) des Gehäuses (1) auf seiner Vorderseite durch Zurückschieben des Schiebers (8) vergrößert. Das Arbeitsblatt (38) kann nunmehr in den Spalt (7) eingeschoben, in der Aussparung (37) des Oberteils (3) ausgerichtet und durch Vorschieben des Schiebers (8) zwischen dem Oberteil und der Grundplatte festgeklemmt werden.

Das Stellglied (29) wird durch Bewegen des Handgriffes (27) nacheinander mit seinem Fadenkreuz über die aufeinanderfolgenden Koordinatenpunkte des Arbeitsblattes (38) verschoben, wobei jedesmal das Eingabeelement (63) betätigt wird.

Beim Verschieben des Schlittens (18) in Längsrichtung verschiebt dabei der Träger (16) über den Seilzug (41) den mit ihm verbundenen Filmstreifen (45) durch den Signalaufnehmer (50) so, daß sich in dessen Meßbereich das der X-Koordinate des ausgewählten Lagepunktes entsprechende Bitmuster der Codespur (61) befindet.

Beim Verschieben des Schiebers (25) auf dem Schlitten (18) vergrößert sich die Lange der einen Schleife des Seilzuges (51) um die eine Seilrolle (36), während sich die Länge der anderen Schleife um die andere Seilrolle (36) verkleinert. Dies bewirkt, daß sich - beispielsweise bei stillstehendem Schlitten (18) und Bewegung des Schiebers (25) zum Kasten (11) hin - der am Seilzug befestigte Filmstreifen (53) nach rechts durch den Signalaufnehmer (55) geschoben wird.

Bei einer Bewegung des Schlittens (18) ohne gleichzeitige Verschiebung des Schiebers (25) auf dem Schlitten (18) rollt der Seilzug (51) auf den Umlenkrollen (52a bis 52d, 52g und 52h) sowie den Seilrollen (36) ab, ohne daß er innerhalb des den Filmstreifen (55) tragenden Bereiches bewegt wird. Auf diese Weise befinden sich in jeder Stellung des Stellgliedes (29) über dem Arbeitsblatt (38) das dem darunter liegenden Koordinatenpunkt des Nähmusters entsprechende Bitmuster der Codespuren (61) der beiden Filmstreifen (45 und 53) in dem Meßbereich des jeweiligen Signalaufnehmers (50 und 55). Durch Betätigung des Eingabeelementes (63) bei Übereinstimmung des Fadenkreuzes des Stellgliedes (29) mit einem Koordinatenpunkt auf dem Arbeitsblatt (38) wird der diesem Punkt entsprechende Codewert an die Schaltung (62) abgegeben und dort nach Aufbereitung an die Speichereinrichtung der Nähmaschine weitergegeben.

## Patentansprüche

1. Digitalisiergerät zum Erfassen von einzelnen Punkten eines Linienzuges, mit einer Grundplatte (2) zur Aufnahme eines Arbeitsblattes (38), auf dem der Linienzug aufgezeichnet ist, mit einem in einem Oberteil (3) angeordneten, aus einem Schlitten (18) und einem Schieber (25) bestehenden Kreuzschlitten (18, 25), der zur Einstellung eines mit dem Schieber (25) verbundenen Stellgliedes (29) auf einzelne Punkte des Linienzuges von Hand über die Grundplatte (2) in X- und Y-Koordinatenrichtung verstellbar ist, mit Übertragungselemente (41, 51) zwischen dem Kreuzschlitten (18, 25) und die Lage des Stellgliedes (29) gegenüber Signalaufnehmern (50, 55) bestimmenden Positionsanzeigeelementen (45, 53) und mit einem von Hand betätigbaren Auslöseelement (63) zur jeweiligen Auslösung der durch die Signalaufnehmer (50, 55) ermittelten Positionsdaten an eine Schaltung (62), wobei die Führung zwischen dem Schlitten (18) und dem Gehäuse (1) des Digitalisiergerätes zwei horizontal verlaufende Führungsbahnen (14, 20a) für drei mit dem Schlitten (18) verbundene Rollenlager (15, 22) aufweist, dadurch gekennzeichnet, daß die Führungsbahn (14) eine V-förmige, nach oben offene Laufspur aufweist und daß die mit dem Schlitten (18) verbundenen Rollenlager als einfache Stützrollen (15, 22) ausgebildet sind, von denen zwei Stützrollen (15) im Winkel schräg gelagert und der V-förmigen Führungsbahn (14) zugeordnet sind, während die dritte Stützrolle (22) der anderen Führungsbahn (20a) zugeordnet ist.

2. Digitalisiergerät nach Anspruch 1, dadurch gekennzeichnet, daß die horizontale Führungsbahn (20a) Teil einer Laufschiene (20) mit einem kegelstumpfförmigen Querschnitt ist, deren seitliche Flächen zur Führung einer entsprechend ausgebildeten Nut (19) in dem Schlitten (18) dient.

3. Digitalisiergerät nach Anspruch 1 oder 2, dadurch gekennzeichnet, daß der Schlitten (18) eine weitere Stützrolle (23) trägt, die sich gegen eine den Schlitten (18) übergreifende, am Oberteil (3) des Gehäuses angeordnete Führungsbahn (24) nachgiebig abstützt.

4. Digitalisiergerät nach einem der Ansprüche 1 bis 3, dadurch gekennzeichnet, daß die Stützrollen (15, 22, 23) als Wälzlager ausgebildet sind.

5. Digitalisiergerät nach einem der Ansprüche 1 bis 4, dadurch gekennzeichnet, daß der Schlitten (18) in seinem Mittelteil (18a) als Führung für den Schieber (25) ausgebildet ist, der das Mittelteil (18a) umgreift und sich über Gleitnasen (31) auf der Oberfläche des Mittelteiles (18a) abstützt.

6. Digitalisiergerät nach einem der Ansprüche 1 bis 5, dadurch gekennzeichnet, daß der Schlitten (18) eine senkrecht zu den beiden Führungsbahnen (14 und 20a) verlaufende V-förmige Nut (33) zur Aufnahme eines V-förmigen, im Schieber (25) elastisch gelagerten Gleitstückes (30) aufweist.

7. Digitalisiergerät nach den Ansprüchen 1 bis 6, dadurch gekennzeichnet, daß der Schlitten (18) und der Schieber (25) über je einen über Umlenkrollen (36, 52a bis 52g) geführten Seilzug (41, 51) mit je einem Codespuren (61) mit periodisch auftretenden Bitmustern tragenden Filmstreifen (45, 53) verbunden ist, die längsverschieblich in einem seitlich von der Bewegungsbahn des Schlittens (18) vorgesehenen Bereich mit den in diesem Bereich vorgesehenen Signalaufnehmern (50, 55) zusammenwirken.

8. Digitalisiergerät nach Anspruch 7, dadurch gekennzeichnet, daß der Schlitten (18) an seinem dem seitlichen Bereich benachbarten Ende Umlenkrollen (52a, 52h) für den Seilzug (51) des Schiebers (25) trägt.

9. Digitalisiergerät nach Anspruch 7 oder 8, dadurch gekennzeichnet, daß die Verbindung zwischen den Filmstreifen (45, 53) und den zugehörigen Seilzug (41 bzw. 51) über selbstsperrende Filmklammern (47) erfolgt.

10. Digitalisiergerät nach einem der Ansprüche 7 bis 9, dadurch gekennzeichnet, daß jeder Seilzug (41, 51) über eine Zugfeder (44 bzw. 60) verspannt ist.

11. Digitalisiergerät nach einem der Ansprüche 1 bis 10, dadurch gekennzeichnet, daß die Verbindung zwischen der Grundplatte (2) und dem Oberteil (3) einerseits aus Scharnieren (5) und andererseits aus unter Federwirkung stehenden selbsthemmenden Schubkeilverbindungen (7a, 8a) besteht.

## Claims

1. A digitalizing apparatus for gathering individual points of a curve, comprising a base plate (2) for accommodation of a work sheet (38) with a curve drawn onto it, a cross-slide (18, 25), which is arranged in a top part (3) and composed of a carriage (18) and a slide (25) which is manually adjustable via the base plate (2) in the X- and Y-coordinate direction in order to set a control element (29) which is connected to the slide (25) to individual points of the curve, transfer elements (41, 51) between the cross-slide (18, 25) and the position-indicator elements (45, 53) which indicate the position of the control element (29) relative to the signal pickups (50, 55), and a manually operated triggering element (63) for a respective release of the position data gathered by the signal pickup (50, 55) to a circuit (62), in which respect the guide between the carriage (18) and the housing (1) of the digitalizing apparatus comprises two horizontally extending guide tracks (14, 20a) for three roller bearings (15, 22) which are connected to the carriage (18), **characterised in** **that** the guide track (14) has a V-shaped upwardly open running track, and that the roller bearings which are connected to the carriage (18) are arranged as single support rollers (15, 22), of which two support rollers (15) are mounted angularly at a slant and associated with the V-shaped guide track (14), whilst the third support roller (22) is associated with the other guide track (20a).

2. Digitalizing apparatus according to claim 1, **characterised in that** the horizontal guide track (20a) is part of a guide rail (20) of truncated cross-section, the lateral surfaces of which serve to guide a respectively designed groove (19) in the carriage (18).

3. Digitalizing apparatus according to claim 1 or 2, **characterised in that** the carriage (18) carries an additional support roller (23) which is resiliently supported against a guide track (24) which reaches over the carriage (18) and which is arranged on the top part (3) of the housing.

4. Digitalizing apparatus according to one of claims 1 to 3, **characterised in that** the support rollers (15, 22, 23) are arranged to be roller bearings.

5. Digitalizing apparatus according to one of claims 1 to 4, **characterised in that** the carriage (18) is in its middle part (18a) designed as a guide for the slide (25), which reaches around the middle part (18a) and is supported via sliding noses (31) on the surface of the middle part (18a).

6. Digitalizing apparatus according to one of claims 1 to 5, **characterised in that** the carriage (18) comprises a V-shaped groove (33), which extends vertically to both guide tracks (14 and 20a) for accommodating a V-shaped slide element (30) which is elastically mounted in the slide (25).

7. Digitalizing apparatus according to claims 1 to 6, **characterised in that** the carriage (18) and the slide (25) are connected, via a respective rope pulley (41, 51) which is ducted via diverting rollers (36, 52a to 52g), to film strips (45, 53), which carry periodically occurring bit patterns and which co-act longitudinally displaceably in an area provided laterally of the movement path of the slide (18) with the signal pickups (50, 55) provided in this area.

8. Digitalizing apparatus according to claim 7, **characterised in that** the slide (18) carries at its end adjacent the lateral area diverting rollers (52a, 52h) for the rope pulley (51) of the slide (25).

9. Digitalizing apparatus according to claim 7 or 8, **characterised in that** the connection between the film strips (45, 53) and the associated rope pulley (41 or 51) is via self-blocking film clips (47).

10. Digitalizing apparatus according to one of claims 7 to 9, **characterised in that** each rope pulley (41, 51) is tensioned by means of a tension spring (44 or 60).

11. Digitalizing apparatus according to one of claims 1 to 10, **characterised in that** the connection between the base plate (2) and the top part (3) is composed on the one side of hinges (5) and on the other side of self-retarding spring-tensioned thrust-wedge links (7a, 8a).

## Revendications

1. Appareil de numérisation, pour l'acquisition de points individuels d'un tracé linéaire, avec une plaque de base (2), pour supporter une feuille de travail (38), sur laquelle est enregistré le tracé linéaire, avec un chariot à mouvements croisés (18, 25), disposé sur une partie supérieure (3), composé d'un chariot (18) et d'un curseur (25), déplaçable à la main pour le réglage d'un organe de réglage (29), relié au curseur (25), sur différents points du tracé linéaire, au-dessus de la plaque de base (2), dans les directions de coordonnées en X et Y, avec des éléments de transmission (41, 51) entre le chariot à mouvement croisé (18, 25) et des éléments d'affichage de position (45, 53) déterminant la position de l'organe de réglage (29), par rapport à des capteurs de signaux (50, 55), et avec un élément déclencheur (63), à manoeuvre manuelle, pour chaque fois déclencher l'envoi des données de position, déterminées par les capteurs de signaux (50, 55) à un circuit (62), le guidage entre le chariot (18) et le carter (1) de l'appareil de numérisation présentant deux pistes de guidage (14, 20a), s'étendant horizontalement, pour trois roulements à rouleaux (15, 22) reliés au chariot (18), caractérisé en ce que la piste de guidage (14) présente une piste de roulement en V, ouverte vers le haut, et en ce que les roulements à rouleaux reliés au chariot (18) sont réalisés sous forme de simples rouleaux d'appui (15, 22), dont deux rouleaux d'appui (15) tourillonnent obliquement en faisant un angle et sont associés à la piste de guidage (14) en V, tandis que le troisième rouleau d'appui (22) est associé à l'autre piste de guidage (20a).

2. Appareil de numérisation selon la revendication 1, caractérisé en ce que la piste de guidage horizontale (20a) fait partie d'une glissière de défilement (20), dont la section transversale est trapézoïdale, dont les surfaces latérales servent au guidage d'une rainure (19) de conformation correspondante ménagée dans le chariot (18).

3. Appareil de numérisation selon la revendication 1 ou 2, caractérisé en ce que le chariot (18) porte un rouleau d'appui (23) supplémentaire, prenant appui de façon élastique contre une piste de guidage (24) recouvrant le chariot (18), disposée sur la face supérieure (3) du carter.

4. Appareil de numérisation selon l'une des revendications 1 à 3, caractérisé en ce que les rouleaux d'appui (15, 22, 23) sont réalisés sous forme de paliers à roulement.

5. Appareil de numérisation selon l'une des revendications 1 à 4, caractérisé en ce que le chariot (18) est réalisé, dans sa partie médiane (18a), sous forme de guidage pour le curseur (25), qui entoure la partie médiane (18a) et prend appui sur la surface de la partie médiane (18a) par l'intermédiaire d'ergots de glissement (31).

6. Appareil de numérisation selon l'une des revendications 1 à 5, caractérisé en ce que le chariot (18) présente une rainure en V (33), s'étendant perpendiculairement par rapport aux deux pistes de guidage (14 et 20a), pour recevoir une pièce de glissement (30) en V, à montage élastique, dans le curseur (25).

7. Appareil de numérisation selon l'une des revendications 1 à 6, caractérisé en ce que le chariot (18) et le curseur (25) sont reliés chacun par un brin de câble (41, 51) guidé sur des rouleaux de renvoi (36, 52a à 52g), avec pour chacun une piste codée (61) avec des bandes de film (42, 53) portant des modèles de bits se renouvelant périodiquement, coopérant, en étant mobile longitudinalement, dans une zone prévue sur le côté de la trajectoire de déplacement du chariot (18), avec les capteurs de signaux (50, 55) prévus dans cette zone.

8. Appareil de numérisation selon la revendication 7, caractérisé en ce que le chariot (18) porte, sur son extrémité voisine de la zone latérale, des rouleaux de renvoi (52a, 52h) pour le brin de câble (51) du curseur (25).

9. Appareil de numérisation selon la revendication 7 ou 8, caractérisé en ce que la liaison entre les bandes de film (43, 53), et le brin de câble (41 respectivement 51) s'effectue par l'intermédiaire de pinces à film (47) autobloquantes.

10. Appareil de numérisation selon l'une des revendications 7 à 9, caractérisé en ce que chaque brin de câble (41, 51) est tendu par l'intermédiaire d'un ressort de traction (44, respectivement 60).

11. Appareil de numérisation selon l'une des revendications 1 à 10, caractérisé en ce que la liaison entre la plaque de base (2) et la partie supérieure (3) est composée d'une part de charnières (5) et, d'autre part de liaisons à coin à enfoncement (7a, 8a) autobloquant sous un effet élastique.
